# EUROPEAN PATENT APPLICATION

(11) **EP 4 677 988 A1**
(43) Date of publication of application: **14.01.2026**
(21) Application number: 24187190.4
(22) Date of filing: 08.07.2024
(51) Int. Cl.: A01D 41/12

(54) **SPREADER SYSTEM FOR AN AGRICULTURAL HARVESTER**

(71) Applicant: CNH Industrial Belgium N.V., 8210 Zedelgem (BE)
(72) Inventor: Somers, Tom N.N., 8210 Zedelgem (BE); Desmet, Stefaan, 8210 Zedelgem (BE)
(74) Representative: CNH Industrial IP Department

(57) **Abstract**

The spreader system comprises two spreader rotors (10) configured to rotate about upright rotation axes (13) and to eject residue crop material centrally between the spreader rotors in a direction tangential to said spreader rotors. The spreader system further comprises a deflector (21) comprising curved deflector blades (20). The deflector is pivotable about an axis (23) oriented transversely, possibly perpendicularly, with respect to the rotation axes (13) of the spreader rotors (10). Adjusting the angular position of the deflector about said pivot axis (23) influences the spreading pattern of residue deposited behind an advancing harvester. The invention thereby enables spreading out crop residue more evenly in a wide deposition zone, compared to currently known spreader systems, which is beneficial for the quality of crops grown subsequently in said zone. The invention is related also to a method for adjusting a spreading pattern behind a harvester, using a system according to an embodiment of the invention.

## Description

### Field of the Invention

The present invention is related to agricultural harvesters, such as combine harvesters, and, more specifically to crop residue spreader systems included in such harvesters.

### State of the art.

An agricultural harvester known as a "combine" is historically termed such because it combines multiple harvesting functions within a single harvesting unit, such as picking, threshing, separating and cleaning. During the process of harvesting in a combine, the desired grain is gathered and saved while crop material other than the desired grain is expelled from the combine. The non-grain crop material or crop residue is usually derived from two areas in the combine, the threshing rotor and the cleaning system. The material expelled from the threshing rotor is generally referred to as straw and includes much of the larger plant material such as stalks, stems, cobbs, leaves and the like as well as foreign or non-crop material. The material expelled from the cleaning system is generally referred to as chaff and includes much of the finer plant material residue, such as pods, husk fragments and particulates. The combined flows of crop residue to be expelled from the combine can be dealt with in several ways; however, the processes for redepositing the residue material back into the field can be categorized generally as either windrowing or spreading.

In a windrowing process, the crop residue is deposited onto the harvested crop stubble in a continuous narrow stream or windrow, which is much narrower than the harvested swath width. Accumulated in this manner, the windrowed residue material can be picked up easily for baling or other subsequent processing or use.

In a spreading process, a mechanical device distributes the straw and/or chaff evenly across the extent of the combine header cutting width. The material to be spread is usually chopped to a short length so that after spreading the material will break down quickly to add nutrients to the soil and/or to be sufficiently small so as to not interfere with subsequent tilling or seeding operations.

Residue spreaders can be of horizontal and vertical types. A horizontal spreader commonly includes two side-by-side spreader rotors driven on respective upright axes to rotate in opposite directions within a housing. After being chopped, the crop residue enters the spreader rotor area, and as the rotors rotate, the residue is propelled towards a tangential outlet. Typically, the spreader system comprises a deflector comprising curved deflector blades oriented parallel to the rotation axis of the rotors.

A problem encountered in current spreader systems is the fact that residue may be spread unevenly behind the combine, which may lead to uneven growth and quality of crops grown subsequently on the field.

### Summary of the invention

The invention is related to a spreader system for a self-propelled harvester and to a harvester provided with said system, as described in the appended claims. The spreader system of the invention comprises two spreader rotors configured to rotate about upright rotation axes and to eject residue crop material centrally between the spreader rotors in a direction tangential to said spreader rotors. The spreader system further comprises a deflector comprising curved deflector blades. In a spreader system according to the invention, the deflector is pivotable about an axis oriented transversely, possibly perpendicularly, with respect to the rotation axes of the spreader rotors. Adjusting the angular position of the deflector about said pivot axis influences the spreading pattern of residue deposited behind an advancing harvester. The invention thereby enables spreading out crop residue more evenly in a wide deposition zone, compared to currently known spreader systems, which is beneficial for the quality of crops grown subsequently in said zone. The invention is related also to a method for adjusting a spreading pattern behind a harvester, using a system according to an embodiment of the invention.

### Brief description of the figures

Figure 1 shows a schematic sideview of a combine harvester as known in the art, indicating a number of key components.
Figures 2a and 2b show conceptual images of a spreader system according to an embodiment of the invention.
Figures 3a and 3b illustrate a first and second angular position of a deflector in a spreader system according to an embodiment of the invention.
Figures 4a and 4b illustrate an example of the influence of pivoting the deflector on a spreading pattern formed behind an advancing harvester.
Figures 5a and 5b illustrate first and second angular positions of a deflector in a more realistic embodiment of a spreader system according to the invention.

### Detailed description of preferred embodiments of the invention

Preferred embodiments will now be described with reference to the drawings. The detailed description is not limiting the scope of the invention, which is defined only by the appended claims.

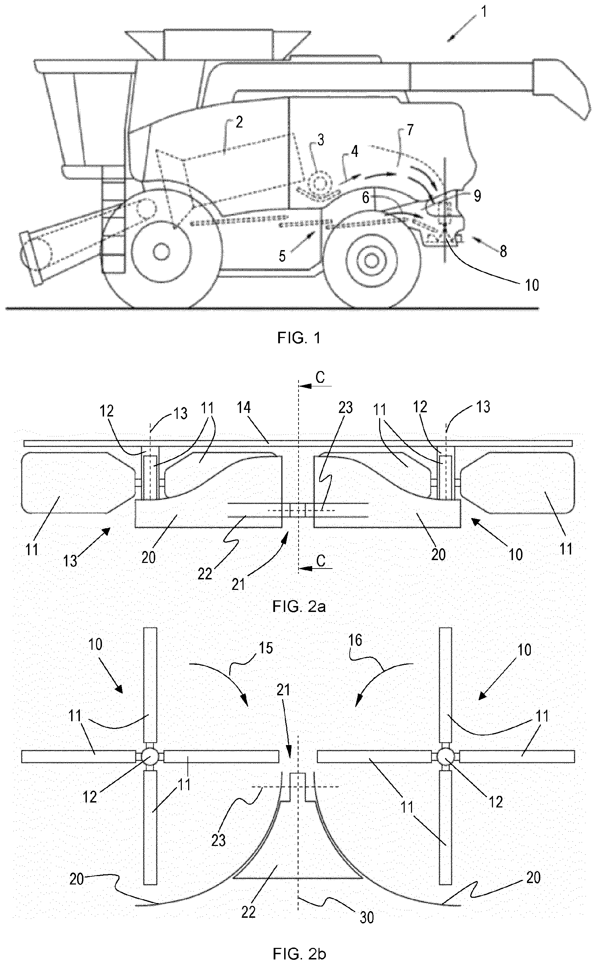

Figure 1 shows a simplified image of an agricultural combine harvester 1 as known in the art. The combine 1 includes a threshing system having a threshing rotor 2 rotatable in a known manner for separating grain-containing material from larger plant residue. A beater 3 is rotatable for directing a stream 4 of said larger residue, also referred to as straw, toward the rear of the combine 1. A cleaning system 5 receives the grain-containing material from the threshing rotor 2 and removes remaining residue such as seedpods, husks and the like, generally referred to as chaff, and directs a flow or stream 6 of chaff toward the rear of the combine 1. The straw 4 and chaff 6 pass through a cavity 7 toward a spreader system 8 at a lower opening 9 of the cavity 7. The spreader system 8 comprises a pair of spreader rotors 10. The system may also comprise a chopper for cutting the straw into small particles before spreading out the particles behind the combine 1 with the help of a deflector. The chopper and the deflector are not shown in Figure 1, which is intended only to generally indicate the location of the spreader system in a combine harvester.

Figures 2a and 2b illustrate front and top views of a spreader system in accordance with an embodiment of the invention. These simplified images illustrate the concept of the invention and a more realistic embodiment will be presented later in this description. The two adjacent spreader rotors 10 are shown, each comprising four paddles 11 attached to a rotatable shaft 12. The rotors are rotatable about respective upright rotation axes 13 relative to a housing 14 which may be fixed to the chassis of a harvester. Only a top portion of the housing 14 is shown in Figure 2a while the top view in Figure 2b shows the spreader system with said top portion of the housing removed. The rotors 10 are coupled to a drive system or to separate motors not shown in the drawing but known generally in the art.

The rotation direction of the rotors 10 is indicated by respective arrows 15 and 16 in Figure 2b. Crop residue coming from a chopper and/or a cleaning section of the harvester is propelled out of the combine by the rotors 10 through a central area between the rotors and in a direction that is tangential to the circumference of the rotors 10. The residue stream exiting from the area between the rotors 10 is deflected by the curved blades 20 of a deflector 21 mounted downstream of the rotors 10. The shape of the blades 20 as seen in the front view in Figure 2a is just one example of a possible deflector shape and the invention is not limited thereto. The deflector 21 comprises a frame 22 to which the blades 20 are attached by suitable attachment means (not shown). The frame 22 of the deflector 21 is mounted on a support structure not shown in the drawings. Said support structure may be fixed relative to the housing 14, or alternatively, the support structure may itself be movable, as will be discussed later.

In accordance with the invention, the deflector 21 is pivotable relative to said support structure about an axis 23 that is oriented transversely to the upright rotation axes 13 of the spreader rotors 10. In the embodiment shown, the pivot axis 23 is perpendicular to said rotation axes 13. Also in the embodiment shown, the frame 22 of the deflector 21 is pivotable about the pivot axis 23. As the blades 20 are attached to said frame 22, this makes the deflector 21 as a whole pivotable about axis 23.

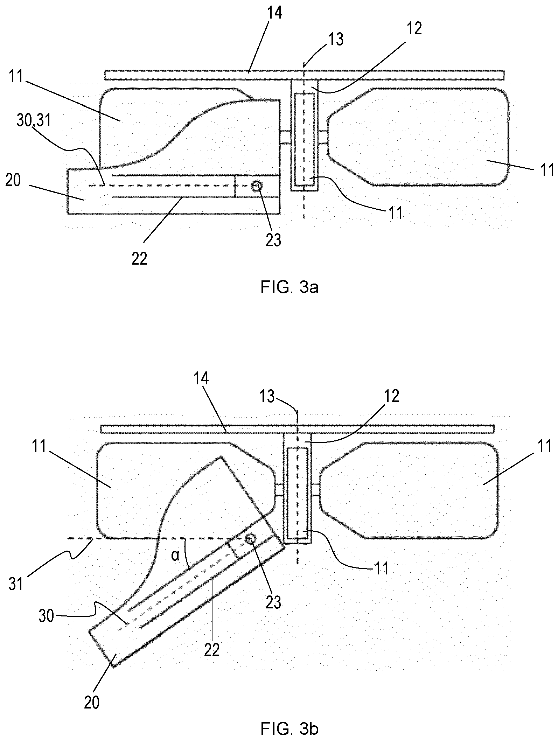

Figure 3a shows a view as seen from the right-hand side, of the section plane C-C indicated in Figure 2a. In the view shown in Figure 3a, the deflector 21 is in the position also illustrated in Figures 2a and 2b : the curved surfaces of the deflector blades 20 are essentially parallel to the rotation axes 13 of the rotors 10. Figure 3b shows a view wherein the deflector 21 has been pivoted downward about the pivot axis 23. The surfaces of the deflector blades 20 are now in a tilted position with respect to the rotation axes 13 of the rotors 10.

The position of the deflector 21 may be expressed by the value of the angle α indicated in Figure 3b, between a symmetry axis 30 (best visible in Figure 2b) of the deflector 21 and a horizontal plane 31. In the embodiment shown, the range of angular positions of the deflector about axis 23 extends between the position shown in Figure 3a and a position like the one shown in Figure 3b, i.e. the angle α indicated is variable between 0° and a value between 0° and -90°. The deflector is thereby pivotable between a position wherein the deflector blades 20 are parallel to the rotation axes 13, i.e. the standard position of the deflector blades in currently known harvesters, and a position wherein the deflector 21 is pivoted downward relative to said standard position.

The pivot axis 23 is preferably situated in a location that enables the majority of the ejected crop residue to impinge on the deflector blades when the deflector is in a pivoted position within an applicable angular range. In the embodiment shown, the pivot axis 23 is located near the underside of the spreader assembly. The invention is however not limited to this particular location, and in other embodiments, the pivot axis could be located higher, for example when the deflector blades have another shape than the one shown in the drawings. The optimal location of the pivot axis 23 could also depend on the relative position of the deflector with respect to the exit area between the rotors through which crops are ejected. In such alternative embodiments, it may for example be advantageous to pivot the deflector upwards relative to the standard position, or to enable both an upward pivoting and a downward pivoting.

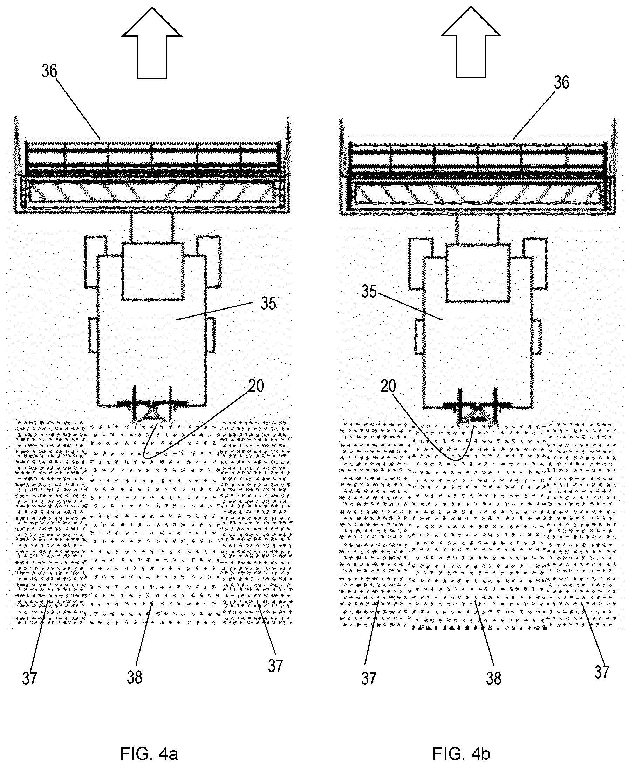

The effect of pivoting the deflector may differ as a function of the shape and size of the deflector blades (as seen in a front view like the one shown in Figure 2a), or the location of the pivot axis 23 relative to the exit area between the rotors. The spreading pattern of crop residue behind an advancing harvester may therefore be influenced in various ways by a spreader system according to the invention. Preferably, the aim is to improve the evenness of the pattern i.e. to deposit roughly the same density of crop residue across the width of a deposition zone. This effect is illustrated for the configuration shown in Figures 2 and 3, on the basis of the images shown in Figures 4a and 4b.

Figure 4a illustrates a possible spreading pattern obtained by the spreader system according to the embodiment of Figures 2 and 3, when the deflector 20 is in the standard position (α = 0°), on a harvester 35 advancing in a field in the indicated direction. The pattern is defined by the density of the spread-out material in the direction perpendicular to the harvester's forward movement, in a deposition zone that roughly corresponds to the width of a header 36 attached at the front of the harvester 35. The pattern illustrated in Figure 4a is defined by a higher density of deposited material in the lateral areas 37 of said zone compared to the central area 38. In reality, the change in density is not as abrupt as represented in the drawing, which is intended only to indicate the general influence of the adjustment of the deflector 20. This influence is illustrated in Figure 4b : by pivoting the deflector 20 downward, less material is spread out in the lateral areas 37 and more is deposited in the central area 38.

The adjustment of the angular deflector position about the pivot axis 23 may be realized in various ways. According to advantageous embodiments, the deflector 21 is coupled to an actuator configured to set the angular position of the deflector (i.e. the angle α) at any value within a given angular range. The actuator may be a hydraulic or electric actuator as generally known in the art. According to preferred embodiments, the actuator is connected to a control unit configured to adjust the angular position of the deflector as a function of an input obtained from a sensor arranged to detect the spreading pattern behind the combine, i.e. the control unit is coupled to the sensor and to the actuator in a feedback loop. The control unit may be a control unit situated in the combine and adapted to perform said feedback loop. As known in the art, suitable sensors for this purpose are radar sensors. The combination of such a sensor with a pivotable deflector according to the invention commanded by an actuator enables to adjust the spreading pattern in real time during a harvesting run, so that uneven spreading patterns can be corrected quickly, thereby minimizing the uneven spreading of crops. The method according to the invention as set out in the appended claims reflects this real-time adjustment of the spreading pattern based on a sensor detection.

Alternatively, the angular position of the deflector may be adjustable manually, for example by providing a plurality of fixed angular positions within an applicable range.

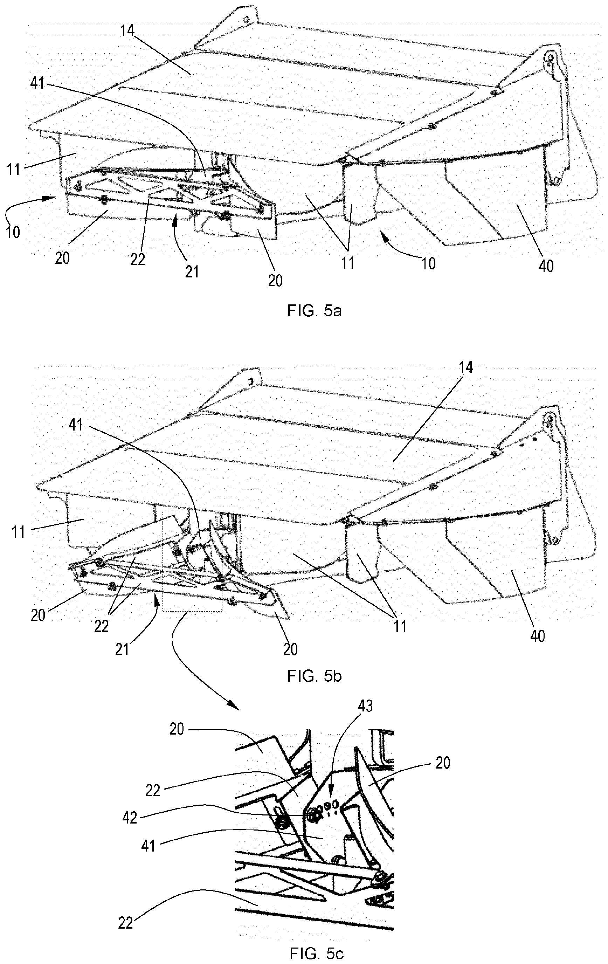

The latter is illustrated in Figures 5a to 5c, which represent a more realistic embodiment of a spreader system according to the invention. The housing 14 is visible with the rotors 10 rotatably mounted therein (only a few of the rotor blades 11 are visible). The housing comprises curved sidewalls 40 partially surrounding the rotors 10. The deflector blades 20 are in the standard position in Figure 5a. It is seen that the blades are attached to a frame 22. The frame 22 is pivotable about a transversal axis, with respect to a centrally placed support structure 41. Figure 5b shows a pivoted position of the deflector 21 that is similar to the position illustrated in Figure 3b. As seen in the detail in Figure 5c, the position of the deflector is adjustable manually by inserting a pin 42 in one of a series of holes 43 in the support structure 41. As stated above, a more advantageous system includes an actuator for adjusting the deflector's angular position continuously, preferably as a function of a detection of the spreading pattern by a suitable sensor.

According to an embodiment, the support structure 41 to which the deflector 21 is pivotably connected is itself movable up and down relative to an additional support structure that is fixed to the chassis of the harvester. This additional degree of freedom extends the ways in which the deflector position influences the spreading pattern.

As stated, the shape of the deflector blades 20 as seen in the frontal view in Figure 2a is merely an example of a possible deflector shape. Any other shape of deflector blades can be applied in a deflector according to the invention. The deflector is not necessarily formed of two separate blades, but could also comprise blades which are integral parts of a single sheet deflector, i.e. having a central connection part that is integral with the curved blade parts of the deflector.

## Claims

1. A spreader system for use in a self-propelled agricultural harvester (35), for spreading crop residue in an area behind the advancing harvester, the system comprising :
- a housing (14,40),
- a pair of spreader rotors (10) configured to rotate relative to the housing about upright rotation axes (13) so as to eject crop residue in a central area between the spreader rotors, and in a direction that is tangential to the spreader rotors (10),
- a deflector (21) comprising a pair of curved deflector blades (20) for deflecting ejected crop residue laterally away from the central area on both sides thereof,
**characterized in that** the deflector (21) is pivotable about a pivot axis (23) oriented transversely with respect to the rotation axes (13) of the spreader rotors (10).

2. The spreader system according to claim 1, wherein said pivot axis (23) is oriented perpendicularly with respect to rotation axes (13) of the spreader rotors (10).

3. The spreader system according to claim 1 or 2, wherein the deflector (21) is pivotable between a first angular position wherein the deflector blades (20) are essentially parallel to said rotation axes (13) of the spreader rotors (10) and a second angular position wherein the deflector (21) is tilted downward or upward relative to said first angular position.

4. The spreader system according to any one of the preceding claims, wherein the deflector (21) is pivotable with respect to a support structure (41) that is fixed relative to the housing (14).

5. The spreader system according to any one of claims 1 to 3, wherein the deflector (21) is pivotable with respect to a support structure that is movable up and down relative to the housing (14).

6. The spreader system according any one of the preceding claims, comprising an actuator for setting an angular position of the deflector (21) to any position within a range of angular positions.

7. The spreader system according to claim 6, wherein the spreader system further comprises a sensor for detecting a spreading pattern behind the harvester while the harvester is operational and advancing in a field of crops, and a control unit coupled to the sensor and to the actuator in a feedback loop in order to adjust the angular position of the deflector (21) as a function of a detected spreading pattern.

8. The spreader system according to any one of claims 1 to 6, wherein the deflector is adjustable manually between a plurality of fixed angular positions.

9. The spreader system according to any one of the preceding claims, wherein the deflector blades (20) are attached to a frame (22) and wherein the frame (22) is pivotable about said pivot axis (23).

10. A combine harvester (35) equipped with a spreader system according to any one of the preceding claims.

11. A method for adjusting a spreading pattern of crop residue that is spread out in a deposition zone behind an advancing harvester equipped with a spreader system according to claim 7, the method comprising the steps of:
- with the deflector (21) in a first angular position, detecting said spreading pattern in said deposition zone,
- if it is determined that the spreading pattern is uneven in the sense that too much material is deposited in lateral areas (37) of the deposition zone, pivoting the deflector (21) relative to said first position,
- again detecting said spreading pattern,
- repeating the previous steps until a desired evenness of the spreading pattern is detected.
